# FASCICULE DE BREVET EUROPEEN

(11) **EP 1 524 406 B1**
(45) Date de publication et mention de la délivrance du brevet: **19.08.2015**
(21) Numéro de dépôt: 04292380.5
(22) Date de dépôt: 06.10.2004
(51) Int. Cl.: F01D 5/14

(54) **Configuration d'une aube mobile d' une turbomachine**
Anordnung einer Turbomaschinenenlaufschaufel
Configuration of a turbomachine rotor blade

(30) Priorité: 16.10.2003 FR 0312064
(43) Date de publication de la demande: 20.04.2005
(73) Titulaire: SNECMA, 75015 Paris (FR)
(72) Inventeur: Rodrigues, Paul, 91600 Savigny Sur Orge (FR); Soupizon, Jean-Luc, 77000 Vaux le Penil (FR)
(74) Mandataire: Ramey, Daniel

(56) Documents cités:
- EP-A- 0 502 660
- EP-A- 1 312 756
- DE-A- 2 217 079
- DE-C- 898 150
- FR-A- 480 958
- FR-A- 2 502 691
- GB-A- 260 411
- GB-A- 2 151 310
- US-A- 1 027 201
- US-A- 2 669 383
- US-A- 4 460 315

## Description

La présente invention concerne un dispositif d'attache d'une aube mobile sur un disque de rotor de turbine dans une turbomachine, telle qu'un turboréacteur ou un turbopropulseur d'avion.

Dans ces turbomachines, les aubes des rotors des étages de turbines sont montées sur des disques de rotor par emmanchement de parties mâles formées par les pieds des aubes dans des cavités formées dans les disques de rotor, cet emmanchement mâle / femelle étant par exemple du type en queue d'aronde (US-A-4 460 315) ou en sapin de sorte que les aubes sont retenues radialement sur les disques de rotor. Des moyens sont prévus pour bloquer axialement les pieds des aubes dans les alvéoles des disques.

Au repos, les axes des aubes sont parfaitement perpendiculaires à l'axe de rotation du rotor.

On a constaté que la structure du rotor est soumise à des efforts axiaux, radiaux et tangentiels, ainsi qu'à des gradients thermiques conduisant à des déformations engendrant des déplacements parasites axiaux des extrémités libres des aubes. Les aubes prennent ainsi, lors du fonctionnement de la turbomachine, une configuration non perpendiculaire par rapport à l'axe de rotation du rotor. Cette configuration diminue le rendement de la turbine et donc la performance de la turbomachine.

Une autre turbomachine selon l'état de la technique est divulguée en GB2151310A.

Un but de la présente invention est de pallier ces inconvénients, grâce à un dispositif d'attache permettant que les axes des aubes soient bien perpendiculaires à l'axe de rotation du rotor pendant le fonctionnement de la turbomachine.

Ce but est atteint au moyen d'un rotor de turbine dans une turbomachine, comprenant au moins un disque et des aubes ayant chacune un pied formant une partie mâle engagée et retenue radialement dans une cavité de forme correspondante du disque de rotor, et des moyens de blocage axial du pied d'aube dans la cavité, caractérisé en ce qu'au repos et dans des conditions de température homogène, l'axe de l'aube est incliné vers l'amont ou vers l'aval par rapport à une perpendiculaire à l'axe de rotation du rotor, dans une direction et avec un angle destinés à compenser au moins partiellement le déplacement de l'axe de ladite aube causé par les contraintes mécaniques et thermiques appliquées au rotor lors du fonctionnement de la turbomachine, l'axe de l'aube étant sensiblement perpendiculaire à l'axe de rotation du rotor en fonctionnement.

Dans un premier mode de réalisation de l'invention, une surface de la cavité, coopérant avec une surface du pied de l'aube qui est perpendiculaire à l'axe de l'aube, est inclinée suivant un angle α par rapport à l'axe de rotation du rotor.

Dans un autre mode de réalisation de l'invention, une surface du pied de l'aube, coopérant avec une surface de la cavité qui est parallèle à l'axe de rotation du rotor, est inclinée suivant un angle α' par rapport à la perpendiculaire à l'axe de l'aube.

Les angles α et α' sont déterminés pour que les axes des aubes soient sensiblement perpendiculaires à l'axe de rotation du rotor en fonctionnement, c'est-à-dire que les angles α et α' sont définis en fonction de la compensation angulaire nécessaire entre la position de l'axe de l'aube au repos et sa position en fonctionnement.

Les angles α et α' sont compris entre -1,5° et +1,5°.

On a constaté que les déplacements parasites des aubes ne sont pas tous dirigés dans le même sens, et que si la plupart des aubes de différents étages de turbine peuvent être inclinées vers l'aval, en fonctionnement, les aubes d'un autre étage peuvent être inclinées vers l'amont.

Le rotor selon l'invention permet de compenser les déviations parasites des aubes des différents étages indépendamment les unes des autres.

De manière générale, un avantage de la présente invention est d'améliorer le rendement de la turbine et donc la performance de la turbomachine en maintenant les aubes mobiles sensiblement perpendiculaires par rapport à l'axe de rotation du rotor pendant le fonctionnement de la turbomachine.

D'autres avantages et caractéristiques de l'invention apparaîtront à la lecture de la description suivante faite à titre d'exemple non limitatif et en référence aux dessins annexés dans lesquels :
- la figure 1 est une vue longitudinale schématique d'un rotor de turbomachine selon un plan passant par l'axe de rotation du rotor et illustre la technique connue ;
- la figure 2 est une vue à plus grande échelle d'une partie de la figure 1 ;
- la figure 3 est une vue longitudinale schématique d'un dispositif d'attache d'une aube mobile sur un disque de rotor selon un plan perpendiculaire à l'axe de rotation du rotor ;
- les figures 4 et 5 sont des vues à plus grande échelle correspondant à une partie de la figure 1 et représentent deux modes de réalisation de l'invention ;
- la figure 6 est une vue schématique partielle d'un fond de cavité, vu dans une direction radiale depuis l'extérieur du rotor.

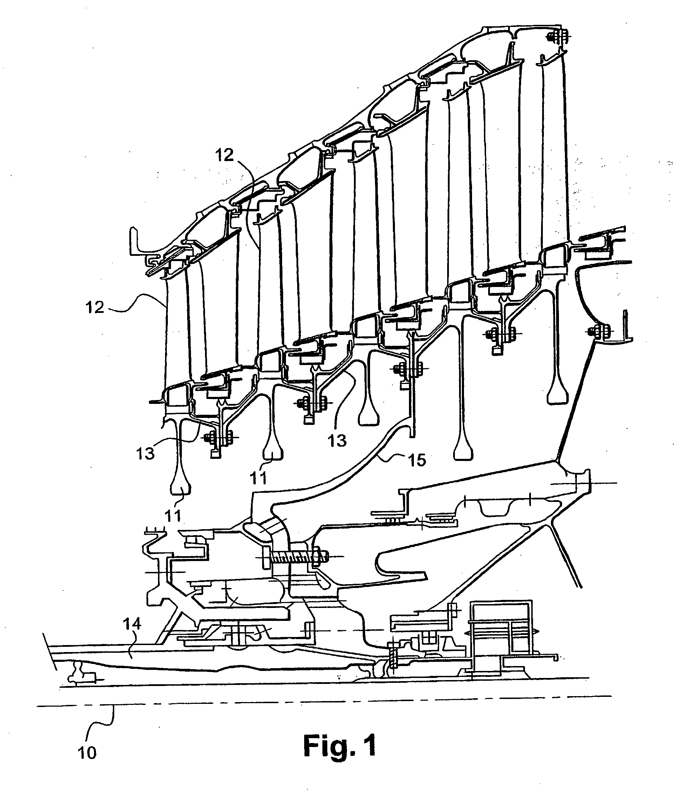

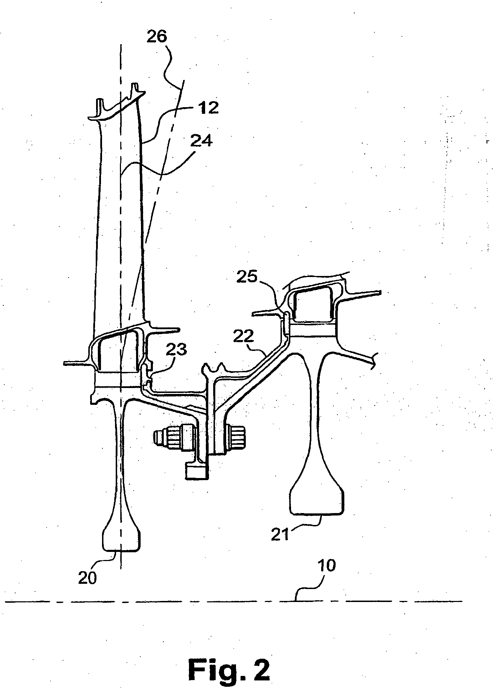

On se réfère d'abord à la figure 1 qui est une vue longitudinale schématique d'un rotor de turbomachine selon un plan passant par l'axe 10 de rotation du rotor. Le rotor 10 comprend des disques de turbine 11 liés entre eux, des aubes 12 attachées sur ces disques et des systèmes 13 de blocage axial des aubes sur les disques, composés de joncs et de flasques disposés entre les aubes et fixés sur les disques, de façon mieux visible en figure 2. Le rotor 10 est relié à l'arbre de turbine 14 par l'intermédiaire d'un cône d'entraînement 15.

En figure 2, on voit que deux disques de turbine 20 et 21 consécutifs sont reliés entre eux par un flasque 22 qui s'étend perpendiculairement entre les disques 20 et 21 et le long de l'axe de rotation. Un jonc d'arrêt 23 est disposé entre un premier disque de rotor 20 et le flasque 22 et un autre jonc d'arrêt 25 est disposé entre le flasque 22 et l'autre disque de rotor 21.

Dans la technique connue, l'axe 24 de la pale de l'aube 12 est perpendiculaire à l'axe 10 de rotation du rotor, au repos et à température normale.

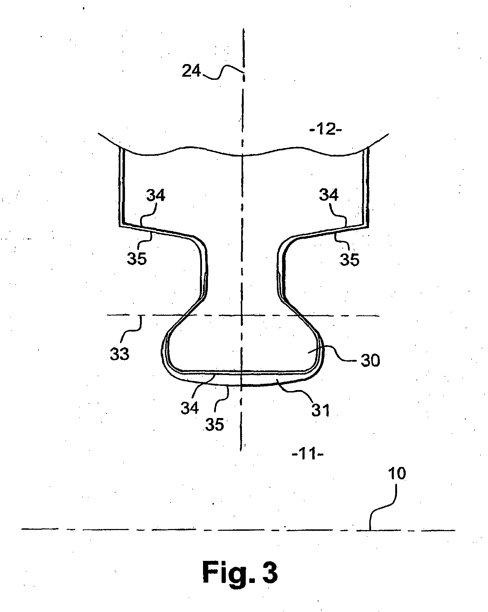

La figure 3 représente des moyens connus de retenue radiale d'une aube 12 sur un disque de rotor 11, qui sont du type en queue d'aronde et qui comprennent une partie mâle 30 formée à une extrémité de l'aube 12 attachée au disque 11 correspondant du rotor, cette partie étant dite pied 30 d'aube ou bulbe, et d'autre part une partie femelle 31 formée à la périphérie du disque 11 du rotor par une cavité appelée alvéole.

Le pied 30 d'aube comporte une surface plane 34 parallèle à l'axe de rotation 10 et se trouvant en regard d'une surface sensiblement plane 35 formant le fond de l'alvéole 31.

En fonctionnement de la turbomachine, la structure du rotor est soumise à des efforts axiaux, radiaux et tangentiels, ainsi qu'à des gradients thermiques conduisant à des déformations engendrant des déplacements parasites axiaux des extrémités libres des aubes 12. On voit sur la figure 2 que l'axe 24 d'une aube prend ainsi une orientation 26 non perpendiculaire à l'axe 10 de rotation du rotor, les inclinaisons parasites des axes des aubes étant dirigées vers l'aval ou vers l'amont. De plus les gradients thermiques provoquent une dilatation du matériau constitutif de l'aube 12 et un déplacement parasite radial desdites aubes 12 par rapport à l'axe 10 de rotation du rotor.

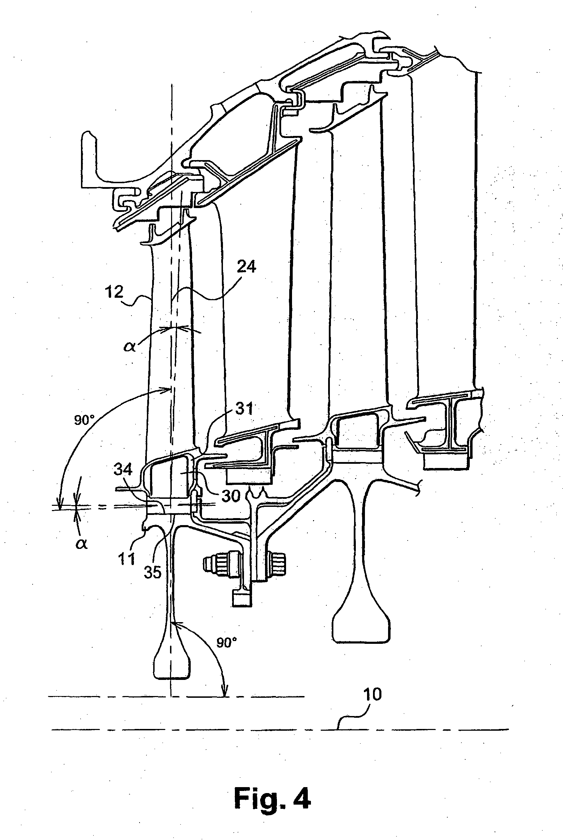

Selon un premier mode de réalisation selon l'invention, représenté en figure 4, la surface 35 de la cavité 31 ou alvéole, correspondant à la surface 34 du pied 30 de l'aube qui est perpendiculaire à l'axe de l'aube 24, est inclinée vers l'amont suivant un angle α par rapport à l'axe 10 de rotation du rotor.

Cela a pour conséquence qu'au repos, l'axe 24 est incliné de l'angle α vers l'amont, comme représenté en figure 4. En fonctionnement, les contraintes axiales, radiales et tangentielles, ainsi que les gradients thermiques conduisant à des déformations engendrant des déplacements parasites axiaux des extrémités libres des aubes 12 ont pour effet que l'axe 24 s'incline vers l'aval et revient dans une position sensiblement perpendiculaire à l'axe 10 de rotation du rotor, l'angle α d'inclinaison au repos étant déterminé pour compenser aussi précisément que possible les déviations parasites des aubes 12.

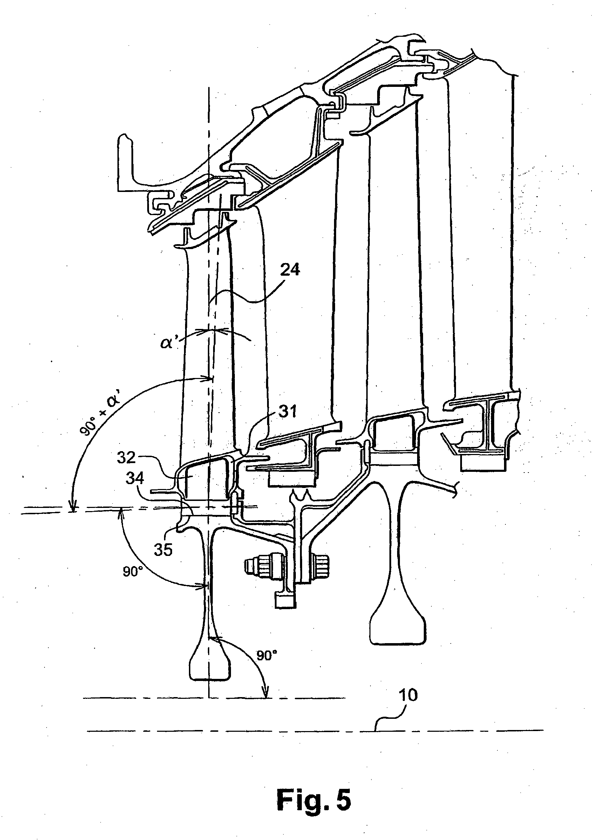

Selon un second mode de réalisation selon l'invention, représenté en figure 5, la surface 34 du pied 30 de l'aube, correspondant à la surface 35 de la cavité 31 ou alvéole qui est parallèle à l'axe 10 de rotation du rotor, est inclinée au repos suivant un angle α' vers l'amont par rapport à la perpendiculaire à l'axe de l'aube 24.

Cela a pour conséquence qu'au repos, l'axe 24 est incliné de l'angle α' vers l'amont, comme représenté en figure 5. En fonctionnement, les contraintes précitées ont pour effet de redresser l'axe 24, qui revient dans une position sensiblement perpendiculaire à l'axe 10 de rotation du rotor, l'angle α' étant préalablement déterminé pour compenser aussi précisément que possible les déviations parasites des aubes 12.

Les déplacements parasites des aubes peuvent être dirigés vers l'aval ou vers l'amont dans les différents étages. Au repos et dans des conditions normales de température, le dispositif d'attache selon l'invention permet d'incliner les axes des aubes 24 selon un angle α ou α' vers l'amont ou vers l'aval et indépendamment les uns des autres dans les différents étages de turbine pour compenser autant que possible les inclinaisons parasites de ces axes et les ramener dans des positions perpendiculaires à l'axe 10 de rotation du rotor en fonctionnement.

Le dispositif selon l'invention n'est pas limité à un seul mode de réalisation par turbomachine. En effet, une turbomachine peut comporter les deux modes de réalisation de l'invention, à savoir d'une part un ou plusieurs disques dans lesquels les surfaces 35 de cavités 31, coopérant avec les surfaces 34 des pieds 30 d'aubes qui sont perpendiculaires aux axes des aubes 24, sont inclinées suivant un angle α par rapport à l'axe 10 de rotation du rotor et d'autre part un ou plusieurs disques dans lesquels les surfaces 34 des pieds 30 d'aubes, coopérant avec les surfaces 35 des cavités 31 qui sont parallèles à l'axe 10 de rotation du rotor, sont inclinées suivant un angle α' par rapport aux perpendiculaires aux axes d'aubes 24.

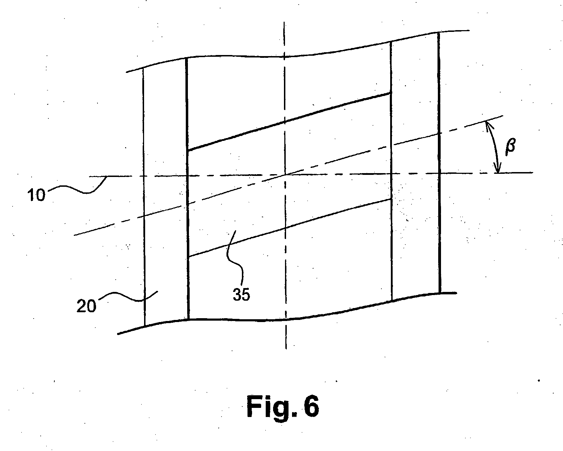

Le dispositif de liaison selon l'invention s'applique à des liaisons aubes / disques de rotor dont les cavités ou alvéoles 31 sont orientées ou non parallèlement à l'axe 10 de rotation du rotor. On a représenté en figure 6, le cas dans lequel la surface de fond 35 d'une cavité ou alvéole 31 est orientée longitudinalement dans une direction qui fait un angle β par rapport à l'axe 10 de rotation du rotor.

Cette orientation est aussi celle du pied 30 d'aube qui est logé dans la cavité ou alvéole 31. De façon précise, l'angle β est l'angle entre la direction longitudinale de la cavité 31 et du pied 30 d'aube d'une part, et une parallèle à l'axe 10 de rotation d'autre part, dans le plan de la figure 6, qui est un plan parallèle à l'axe 10 de rotation du rotor.

## Revendications

1. Rotor de turbine dans une turbomachine, comprenant au moins un disque et des aubes ayant chacune un pied (30) formant une partie mâle engagée et retenue radialement dans une cavité (31) de forme correspondante du disque (11) de rotor, et des moyens de blocage axial du pied (30) d'aube dans la cavité (31), **caractérisé en ce qu'**au repos et dans des conditions de température homogène, l'axe (24) de l'aube est incliné vers l'amont ou vers l'aval par rapport à une perpendiculaire à l'axe (10) de rotation du rotor, dans une direction et avec un angle destinés à compenser au moins partiellement le déplacement de l'axe (24) de l'aube causé par les contraintes mécaniques et thermiques appliquées au rotor lors du fonctionnement de la turbomachine, l'axe de l'aube étant sensiblement perpendiculaire à l'axe de rotation du rotor en fonctionnement.

2. Rotor selon la revendication 1, **caractérisé en ce qu'**une surface (35) de la cavité (31), coopérant avec une surface (34) du pied (30) d'aube qui est perpendiculaire à l'axe (24) de l'aube, est inclinée suivant un angle α par rapport à l'axe (10) de rotation du rotor.

3. Rotor selon la revendication 1, **caractérisé en ce qu'**une surface (34) du pied d'aube (30), coopérant avec une surface (35) de la cavité (31) qui est parallèle à l'axe (10) de rotation du rotor, est inclinée suivant un angle α' par rapport à la perpendiculaire à l'axe (24) de l'aube.

4. Rotor selon la revendication 2 ou 3, **caractérisé en ce que** l'angle α ou α' est déterminé pour que les axes (24) des aubes soient sensiblement perpendiculaires à l'axe de rotation du rotor (10) en fonctionnement.

5. Rotor selon l'une des revendications 2 à 4, **caractérisé en ce que** l'angle α, α' est compris entre -1,5° et +1,5°.

6. Rotor selon l'une des revendications 1 à 5, **caractérisé en ce qu'**au repos, les axes (24) des aubes d'au moins un étage de turbine sont dirigés vers l'amont.

7. Rotor selon l'une des revendications 1 à 6, **caractérisé en ce qu'**au repos, les axes (24) des aubes d'au moins un étage de turbine sont dirigés vers l'aval.

8. Rotor selon l'une des revendications 1 à 7, **caractérisé en ce que** les moyens de blocage axial du pied (30) d'aube dans la cavité (31), comprennent un jonc annulaire (23) appliqué par un flasque (22) porté par le disque (11) de rotor.

9. Rotor selon l'une des revendications 1 à 8, **caractérisé en ce que** la cavité (31) et le pied d'aube (30) ont une orientation longitudinale qui est parallèle à l'axe (10) de rotation du rotor ou qui fait un angle β par rapport à cet axe, dans un plan parallèle à l'axe (10) de rotation.

10. Rotor selon l'une des revendications 1 à 9, **caractérisé en ce que** le pied d'aube (30) et la cavité (31) sont du type en queue d'aronde.

11. Turbine de turbomachine, **caractérisée en ce qu'**elle comprend un rotor selon l'une des revendications 1 à 10.

12. Turbomachine, **caractérisée en ce qu'**elle comprend un rotor selon l'une des revendications 1 à 10.

## Patentansprüche

1. Turbinenrotor in einer Turbomaschine bzw. einem Turbotriebwerk, enthaltend zumindest eine Scheibe und Schaufeln mit jeweils einem Schaufelfuß (30), der ein Einsteckteil bildet, das in einen Hohlraum (31) mit einer der Rotorscheibe (11) entsprechenden Form eingreift und darin radial festgehalten wird, sowie Sicherungsmittel zum axialen Sichern des Schaufelfußes (30) in dem Hohlraum (31), **dadurch gekennzeichnet, dass** in Ruhestellung und bei homogenen Temperaturbedingungen die Achse (24) der Schaufel gegenüber einer Senkrechten zur Drehachse (10) des Rotors in Richtung stromaufwärts oder stromabwärts geneigt verläuft, und zwar in einer Richtung und unter einem Winkel, die dazu bestimmt sind, zumindest teilweise die Verlagerung der Achse (24) der Schaufel zu kompensieren, die durch die mechanischen und thermischen Spannungen verursacht wird, denen der Rotor im Betrieb der Turbomaschine bzw. des Turbotriebwerks ausgesetzt ist, wobei die Achse der Schaufel im Wesentlichen senkrecht zur Drehachse des Rotors im Betrieb verläuft.

2. Rotor nach Anspruch 1, **dadurch gekennzeichnet, dass** eine Fläche (35) des Hohlraums (31), die mit einer Fläche (34) des Schaufelfußes (30) zusammenwirkt, welche senkrecht zur Achse (24) der Schaufel verläuft, unter einem Winkel α gegenüber der Drehachse (10) des Rotors geneigt verläuft.

3. Rotor nach Anspruch 1, **dadurch gekennzeichnet, dass** eine Fläche (34) des Schaufelfußes (30), die mit einer Fläche (35) des Hohlraums (31) zusammenwirkt, welche parallel zur Drehachse (10) des Rotors verläuft, unter einem Winkel α' gegenüber der Senkrechten zur Achse (24) der Schaufel geneigt verläuft.

4. Rotor nach Anspruch 2 oder 3, **dadurch gekennzeichnet, dass** der Winkel α oder α' so bestimmt ist, dass die Achsen (24) der Schaufeln im Wesentlichen senkrecht zur Drehachse des Rotors (10) im Betrieb verlaufen.

5. Rotor nach einem der Ansprüche 2 bis 4, **dadurch gekennzeichnet, dass** der Winkel α, α' zwischen -1,5° und +1,5° beträgt.

6. Rotor nach einem der Ansprüche 1 bis 5, **dadurch gekennzeichnet, dass** in Ruhestellung die Achsen (24) der Schaufeln zumindest einer Turbinenstufe in Richtung stromaufwärts gerichtet sind.

7. Rotor nach einem der Ansprüche 1 bis 6, **dadurch gekennzeichnet, dass** in Ruhestellung die Achsen (24) der Schaufeln zumindest einer Turbinenstufe in Richtung stromabwärts gerichtet sind.

8. Rotor nach einem der Ansprüche 1 bis 7, **dadurch gekennzeichnet, dass** die Sicherungsmittel zum axialen Sichern des Schaufelfußes (30) in dem Hohlraum (31) ein Ringrohr (23) aufweisen, das über einen Flansch (22) angedrückt wird, der von der Rotorscheibe (11) getragen wird.

9. Rotor nach einem der Ansprüche 1 bis 8, **dadurch gekennzeichnet, dass** der Hohlraum (31) und der Schaufelfuß (30) eine Längsausrichtung haben, die parallel zur Drehachse (10) des Rotors verläuft oder einen Winkel β mit dieser Achse in einer Ebene parallel zur Drehachse (10) einschließt.

10. Rotor nach einem der Ansprüche 1 bis 9, **dadurch gekennzeichnet, dass** der Schaufelfuß (30) und der Hohlraum (31) schwalbenschwanzartig ausgeführt sind.

11. Turbine einer Turbomaschine bzw. eines Turbotriebwerks, **dadurch gekennzeichnet, dass** sie einen Rotor nach einem der Ansprüche 1 bis 10 enthält.

12. Turbomaschine bzw. Turbotriebwerk, **dadurch gekennzeichnet, dass** sie bzw. es einen Rotor nach einem der Ansprüche 1 bis 10 enthält.

## Claims

1. A turbine rotor in a turbomachine, comprising at least one disk, blades having a root (30) defining a male portion radially engaged and held radially in a slot (31) of complementary shape of the rotor disk (11), and means for preventing the blade root (30) from moving axially in the slot (31), **characterized in that**, at rest and under uniform temperature conditions, the axis (24) of the blade is inclined upstream or downstream relative to a plane perpendicular to the axis (10) of rotation of the rotor, in a direction and at an angle that are designed to compensate at least in part for the displacement of the axis (24) of the blade caused by the mechanical and thermal stresses applied to the rotor during operation of the turbomachine, the axis of the blade being substantially perpendicular to the axis of rotation of the rotor in operation.

2. Rotor according to claim 1, **characterized in that** a surface (35) of the slot (31), co-operating with a surface (34) of the blade root (30) that is perpendicular to the axis (24) of the blade, is inclined at an angle α relative to the axis (10) of rotation of the rotor.

3. Rotor according to claim 1, **characterized in that** a surface (35) of the blade root (30), co-operating with a surface (35) of the slot (31) that is parallel to the axis (10) of rotation of the rotor, is inclined at an angle α' relative to the perpendicular to the axis (24) of the blade.

4. Rotor according to claim 2 or claim 3, **characterized in that** the angle α, or α' is determined so that the axis (24) of the blades are substantially perpendicular to the axis of rotation of the rotor (10) in operation.

5. Rotor according to anyone of claims 2 to 4, **characterized in that** the angle α, α' lies in the range -1.5° to +1.5°.

6. Rotor according to anyone of claims 1 to 5, **characterized in that**, at rest, the axis (24) of the blades of at least one stage of the turbine are directed upstream.

7. Rotor according to anyone of claims 1 to 6, **characterized in that**, at rest, the axis (24) of the blades of at least one stage of the turbine are directed downstream.

8. Rotor according to anyone of claims 1 to 7, **characterized in that** the means for preventing the blade root (30) from moving axially in the slot (31) comprise an annular retaining ring (23) pressed into place by a shield (22) carried by the rotor disk (11).

9. Rotor according to anyone of claims 1 to 8, **characterized in that** the slot (31) and the blade root (30) have a longitudinal orientation that is parallel to the axis (10) of rotation of the rotor, or that makes an angle β relative to said axis, in a plane parallel to the axis (10) of rotation.

10. Rotor according to anyone of claims 1 to 9, **characterized in that** the blade root (30) and the slot (31) are of the dovetail type.

11. A turbomachine turbine, **characterized in that** it comprises a rotor according to anyone of claims 1 to 10.

12. A turbomachine, **characterized in that** it comprises a rotor according to anyone of claims 1 to 10.
